# EUROPÄISCHE PATENTSCHRIFT

(11) **EP 0 997 719 B1**
(45) Veröffentlichungstag und Bekanntmachung des Hinweises auf die Patenterteilung: **08.01.2003**
(21) Anmeldenummer: 99120195.5
(22) Anmeldetag: 09.10.1999
(51) Int. Cl.: G01L 5/28, B60T 17/22

(54) **Verfahren zur Bremsenprüfung bei Kraftfahrzeugen**
Method of testing the brakes of automotive vehicles
Procédé pour tester des freins des véhicules automobiles

(30) Priorität: 30.10.1998 DE 19850080
(43) Veröffentlichungstag der Anmeldung: 03.05.2000
(73) Patentinhaber: ROBERT BOSCH GMBH, 70442 Stuttgart (DE)
(72) Erfinder: Dannenmann, Artur, 73035 Göppingen (DE); Mai, Hans, 73035 Göppingen (DE)

(56) Entgegenhaltungen:
- DE-A- 2 642 776
- DE-A- 3 311 041
- GB-A- 965 315
- US-A- 5 467 645

## Beschreibung

### Stand der Technik

Die Erfindung geht aus von einem Verfahren zur Bremsenprüfung bei Kraftfahrzeugen, bei dem das Fahrzeug aus einer bestimmten Bewegung heraus zum Stillstand abgebremst wird, gemäß der im Oberbegriff des Anspruchs 1 definierten Gattung.

Zur Prüfung der Bremsen bei Kraftfahrzeugen sind verschiedene Verfahren und Anordnungen bekannt. So gibt es Plattenprüfstände, bei denen das Fahrzeug mit einer bestimmten Geschwindigkeit auf verschiedene Platten gefahren wird und dort zum Stillstand abgebremst wird und über die Reaktion zwischen den Rädern und den Platten auf die Bremskraft der einzelnen Räder geschlossen wird. Bekannt sind weiterhin Rollenprüfstände, bei denen die einzelnen Achsen des Fahrzeugs auf Rollen gestellt werden, die dann ihrerseits angetrieben und abgebremst werden und dadurch auf die Bremskraft geschlossen wird. Weiterhin ist es bekannt, bei der Bremsenprüfung Verzögerungsmeßgeräte einzusetzen. Nachteilig ist bei den bekannten Verfahren und Anordnungen zur Bremsenprüfung bei Kraftfahrzeugen, daß üblicherweise eine kostenintensive Mechanik vorgesehen sein muß, und auch bei Rollenprüfständen mit einem erheblichen Energiebedarf zu rechnen ist.

Die US 5,467,645 beschreibt ein System zur Prüfung von Kraftfahrzeugbremsen, bei dem das Fahrzeug gewogen und auf einer Teststrecke abgebremst wird, wobei im Fahrzeug ein Sensor die Stärke der Betätigung der Bremse mißt und über einen Sensor an einen Teststand meldet.

Die DE 26 42 776 betrifft ein Gerät und ein Verfahren zur Feststellung des Bremsverhaltens eines Fahrzeugs, bei dem die Bremsmomente durch besondere Meßräder an jedem einzelnen Rad gemessen werden, wobei die Meßräder mit Dehnungsmeßstreifen versehen sind.

Die GB 965 315 betrifft die Prüfung des Fahrverhaltens eines Kraftfahrzeugs, wobei am Fahrzeug ein aktiver optischer Geber und ein optischer Sensor vorgesehen ist, welcher auf z.B. auf der Fahrbahn angebrachte reflektierende Markierungen reagiert.

### Voteile der Erfindung

Das erfindungsgemäße Verfahren zur Bremsenprüfung bei Kraftfahrzeugen mit den kennzeichnenden Merkmalen des Anspruchs 1 hat demgegenüber die Vorteile, daß die Bremsenprüfung auf einfache und kostengünstige Weise durchzuführen ist und in der Regel keine baulichen Maßnahmen, wie beispielsweise eine Werkstattgrube, erforderlich sind. Im Vergleich zu Rollenprüfständen ist der Energiebedarf minimal.

Bei dem Verfahren gemäß der Erfindung ist dazu vorgesehen, daß beim Prüfvorgang die Position des Fahrzeuges mittels Sensoren laufend beobachtet, gemessen und registriert wird, aus diesen Werten die Position des Fahrzeugs in bezug auf ortsfeste Referenzwerte zur Verfolgung der Fahrzeugposition während der Abbremsung generiert wird und daraus die relevanten, zugehörigen Bremskräfte ermittelt werden. Aus den Werten, die beim Prüfvorgang zur Bestimmung der Position des Fahrzeuges mittels Sensoren laufend beobachtet, gemessen und registriert werden, werden die Entfernungen des Fahrzeugs in bezug auf ortsfeste Referenzwerte ermittelt. Aus den Positionsdaten unmittelbar vor Bremsbetätigung wird vorausschauend der weitere Bewegungsablauf berechnet. Aus den Positionsdaten beim Abbremsvorgang wird der tatsächliche Bewegungsablauf ermittelt. Aus den Abweichungen zwischen den Entfernungen bei vorausschauendem und tatsächlichem Bewegungsablauf werden die Bremsbeschleunigungswerte abgeleitet, um daraus die Berechnung der Bremskräfte durchzuführen, wobei eine Betrachtung aufgeteilt in Längs- und Querrichtung der Fahrzeugachse erfolgt. Die Abbremsung erfolgt als Vollbremsung aus einer bestimmten Geschwindigkeit heraus zum Stillstand und ohne Eingriff am Lenkrad.

Durch die in den weiteren Ansprüchen niedergelegten Merkmale sind vorteilhafte Weiterbildungen und Verbesserungen des im Anspruch 1 angegebenen Verfahrens möglich.

In vorteilhafter Weiterbildung des erfindungsgemäßen Verfahrens können alternativ die Sensoren am Fahrzeug selbst oder an einem ortsfesten System angebracht sein.

Besonders vorteilhaft ist es beim erfindungsgemäßen Verfahren, daß die Bremsenprüfung auf normalem Boden- oder Straßenbelag oder, falls dies vom Gesetzgeber so verlangt ist, auf einem Belag mit speziell definiertem Reibbeiwert durchgeführt werden kann.

Entsprechend einer weiteren vorteilhaften Ausgestaltung des erfindungsgemäßen Verfahrens beträgt die bestimmte Bewegung oder die Geschwindigkeit, aus der heraus der Abbremsvorgang zum Stillstand erfolgt, etwa 5 km/h.

In zweckmäßiger Weiterbildung des erfindungsgemäßen Verfahrens können als Sensoren zur Positionsbestimmung des Fahrzeugs Ultraschallsensoren, Infrarotsensoren, Radarsensoren oder auch Funksensoren verwendet werden. Besonders zweckmäßig ist es, optische Auswerteverfahren zu verwenden.

Die Erfindung wird anschließend in der nachfolgenden Beschreibung näher erläutert.

### Beschreibung des Ausführungsbeispiels

Bei der Bremsenprüfung entsprechend dem erfindungsgemäßen Verfahren wird das Kraftfahrzeug auf einer ebenen Unterlage, was im Idealfall der normale Werkstattboden, oder der Straßenbelag ist, oder auch, wenn der Gesetzgeber einen definierten Reibbeiwert verlangt, auf einem entsprechend präparierten Bodenbelag, beispielsweise aus Asphalt oder Stahl, das Fahrzeug aus einer bestimmten Bewegung bzw. Geschwindigkeit heraus von etwa 5 km/h durch eine Vollbremsung zum Stillstand abgebremst. Bei diesem Abbremsvorgang soll kein Eingriff am Lenkrad erfolgen, um das Ergebnis nicht zu verfälschen.

Im Fahrzeug selbst oder im ortsfesten System, beispielsweise einer Werkstatt, sind Sensoren angebracht. Mittels dieser Sensoren wird laufend die Position des Fahrzeugs beobachtet, gemessen und registriert. Die beim Bremsen auftretenden Reibungskräfte zwischen den Rädern und deren Auflagefläche beeinflussen den Bewegungsverlauf. Die Verzögerungskräfte in Richtung der Fahrzeuglängsachse verlangsamen die Bewegung, Querkräfte als Folge unterschiedlicher Bremskräfte auf der rechten und der linken Seite des Fahrzeuges führen zu einer Richtungsänderung. Aus den gemessenen Positionswerten des Fahrzeuges wird in bezug auf ortsfeste Referenzwerte zur Verfolgung der Fahrzeugposition während des Abbremsvorgangs die Position des Fahrzeuges generiert und daraus werden die relevanten, zugehörigen Bremskräfte ermittelt.

Als besonders zweckmäßiges Verfahren hat sich dabei herausgestellt, die Entfernungen des Fahrzeugs in bezug auf ortsfeste Referenzwerte zu ermitteln und aus den Positionsdaten unmittelbar vor Bremsbetätigung vorausschauend den weiteren Bewegungsablauf zu berechnen. Dann wird aus den Positionsdaten beim Abbremsvorgang selbst der tatsächliche Bewegungsablauf ermittelt. Aus den Abweichungen zwischen den Entfernungen bei vorausschauendem und tatsächlichem Bewegungsablauf werden die Bremsbeschleunigungskräfte abgeleitet, um daraus die Berechnung der Bremskräfte durchzuführen. Dabei erfolgt eine Betrachtung aufgeteilt in Längs- und Querrichtung der Fahrzeugachse. Wie bereits gesagt, erfolgt die Abbremsung als Vollbremsung aus einer bestimmten Geschwindigkeit von etwa 5 km/h heraus zum Stillstand und ohne Eingriff am Lenkrad. Die Sensoren selbst können am Fahrzeug oder an einem ortsfesten System, beispielsweise innerhalb einer Werkstatt angebracht sein. Vorteilhaft ist es, die Bremsprüfung auf normalem Boden- oder Straßenbelag durchzuführen. Falls es jedoch erforderlich ist, kann auch ein Belag mit speziell definiertem Reibbeiwert vorgesehen sein.

Für die Messung der Entfernung zwischen dem ortsfesten System und dem Fahrzeug können unterschiedliche Weg-Sensoren eingesetzt werden, wie beispielsweise Ultraschallsensoren, Infrarotsensoren, Radarsensoren oder Funksensoren. Zur Auswertung werden zweckmäßiger Weise optische Auswerteverfahren verwendet, beispielsweise optische Korrelationsverfahren, bei denen zeitliche Änderungen eines Rasters ausgewertet werden. Es lassen sich Verformungen, Wegänderungen, oder daraus abgeleitet, Geschwindigkeits- und Beschleunigungsverläufe ermitteln.

Das erfindungsgemäße Verfahren bietet gegenüber herkömmlichen kostenintensiven mechanischen Bremsprüfungsverfahren erhebliche Kostenvorteile, da in der Regel keine besonderen kostenintensiven baulichen Maßnahmen erforderlich sind. Weiterhin ist beispielsweise im Vergleich zu Rollenprüfständen der Energiebedarf minimal. Die Bremsenprüfung mit dem erfindungsgemäßen Verfahren erfolgt somit auf einfache und kostengünstige Weise.

## Patentansprüche

1. Verfahren zur Bremsenprüfung bei Kraftfahrzeugen, bei dem das Fahrzeug aus einer bestimmten Bewegung heraus abgebremst wird, wobei beim Prüfvorgang die Position des Fahrzeuges mittels Sensoren laufend beobachtet, gemessen und registriert wird, **dadurch gekennzeichnet, daß** aus den Werten, die beim Prüfvorgang zur Bestimmung der Position des Fahrzeuges mittels Sensoren laufend beobachtet, gemessen und registriert werden, die Entfernungen des Fahrzeugs in Bezug auf ortsfeste Referenzwerte ermittelt werden, aus den Positionsdaten unmittelbar vor Bremsbetätigung vorausschauend der weitere Bewegungsablauf berechnet wird, aus den Positionsdaten beim Abbremsvorgang der tatsächliche Bewegungsablauf ermittelt wird, aus den Abweichungen zwischen den Entfernungen bei vorausschauendem und tatsächlichem Bewegungsablauf die Bremsbeschleunigungswerte abgeleitet werden, um daraus die Berechnung der zugehörigen Bremskräfte durchzuführen, wobei eine Betrachtung aufgeteilt in Längs- und Querrichtung der Fahrzeugachse erfolgt und wobei die Abbremsung als Vollbremsung aus einer bestimmten Geschwindigkeit heraus zum Stillstand und ohne Eingriff am Lenkrad erfolgt.

2. Verfahren nach Anspruch 1, **dadurch gekennzeichnet, daß** die Sensoren am Fahrzeug selbst oder an einem ortsfesten System angebracht sind.

3. Verfahren nach Anspruch 1 oder 2, **dadurch gekennzeichnet, daß** die Bremsprüfung auf normalem Boden- oder Straßenbelag oder einem Belag mit speziell definiertem Reibbeiwert durchgeführt wird.

4. Verfahren nach Anspruch 1 oder einem der Ansprüche 2 oder 3, **dadurch gekennzeichnet, daß** die bestimmte Bewegung oder Geschwindigkeit, aus der heraus der Abbremsvorgang zum Stillstand erfolgt, etwa 5 km/h beträgt.

5. Verfahren nach einem der Ansprüche 1 bis 4, **dadurch gekennzeichnet, daß** als Sensoren zur Positionsbestimmung des Fahrzeugs Ultraschallsensoren oder Infrarotsensoren oder Radarsensoren oder Funksensoren verwendet werden.

6. Verfahren nach Anspruch 1 oder einem der Ansprüche 2 bis 5, **dadurch gekennzeichnet, daß** optische Auswerteverfahren verwendet werden.

## Claims

1. Method for testing the brakes in motor vehicles, in which the vehicle is braked from a specific movement, the position of the vehicle being continuously monitored, measured and recorded during the testing process by means of sensors, **characterized in that** the distances of the vehicle are determined with respect to fixed reference values from the values which are continuously monitored, measured and recorded during the testing process by means of sensors in order to determine the position of the vehicle, the further movement profile is calculated from the position data in a predictive fashion directly before the activation of the brakes, the actual movement profile is determined from the position data during the braking process, the braking acceleration values are derived from the deviations between the distances during the predictive movement profile and the actual movement profile in order to calculate the associated braking forces therefrom, an examination being carried out split into the longitudinal and transverse directions of the vehicle axle, and the braking taking place as full braking from a specific speed to the stationary state and without intervention at the steering wheel.

2. Method according to Claim 1, **characterized in that** the sensors are mounted on the vehicle itself or on a fixed system.

3. Method according to Claim 1 or 2, **characterized in that** the brakes are tested on a normal ground covering or road covering or on a covering with a specially defined coefficient of friction.

4. Method according to Claim 1 or either of Claims 2 and 3, **characterized in that** the specific movement or speed from which the braking process to the stationary state takes place is approximately 5 km/h.

5. Method according to one of Claims 1 to 4, **characterized in that** ultrasonic sensors or infrared sensors or radar sensors or radio sensors are used as sensors for determining the position of the vehicle.

6. Method according to Claim 1 or one of Claims 2 to 5, **characterized in that** optical evaluation methods are used.

## Revendications

1. Procédé pour tester des freins de véhicules automobiles selon lequel le véhicule est freiné à partir d'un mouvement donné, la position du véhicule lors de l'opération d'essai étant surveillée, mesurée et enregistrée constamment au moyen de capteurs,
**caractérisé en ce que**
les distances du véhicule par rapport aux valeurs de références stationnaires sont élaborées à partir des valeurs qui sont surveillées, mesurées et enregistrées constamment au moyen de capteurs pour déterminer la position lors de l'opération d'essai, le déroulement ultérieur du mouvement est calculé par pronostic à partir des données de position immédiatement avant l'actionnement des freins, le déroulement effectif du mouvement est déterminé à partir des données de position lors de l'opération de freinage, les valeurs d'accélération de freinage sont déduites à partir des différences entre les distances lors du déroulement du mouvement pronostiqué et effectif, afin de réaliser sur ces bases le calcul des forces de freinage correspondantes, en effectuant une observation répartie en direction longitudinale et transversale de l'axe du véhicule, le freinage étant effectué en tant que freinage total à partir d'une vitesse donnée jusqu'à l'arrêt et sans intervention sur le volant de direction.

2. Procédé selon la revendication 1,
**caractérisé en ce que**
les capteurs sont appliqués sur le véhicule lui-même ou sur un système stationnaire.

3. Procédé selon la revendication 1 ou 2,
**caractérisé en ce que**
l'essai des freins est réalisé sur un revêtement de sol ou un revêtement routier normal ou sur un revêtement avec un coefficient de friction spécialement défini.

4. Procédé selon la revendication 1 ou l'une des revendications 2 ou 3,
**caractérisé en ce que**
le mouvement donné ou la vitesse donnée, à partir desquels l'opération de freinage est effectuée jusqu'à l'arrêt, est d'environ 5 km/h.

5. Procédé selon l'une des revendications 1 à 4,
**caractérisé en ce qu'**
on utilise en tant que capteurs pour déterminer la position du véhicule, des capteurs à ultrasons ou des capteurs d'infrarouge ou des capteurs radar ou des capteurs radio.

6. Procédé selon la revendication 1 ou l'une des revendications 2 à 5,
**caractérisé en ce qu'**
on utilise des procédés optiques d'évaluation.
